# EUROPÄISCHE PATENTSCHRIFT

(11) **EP 1 479 568 B1**
(45) Veröffentlichungstag und Bekanntmachung des Hinweises auf die Patenterteilung: **14.06.2006**
(21) Anmeldenummer: 04007152.4
(22) Anmeldetag: 25.03.2004
(51) Int. Cl.: B60R 19/18, B62D 21/00, F16F 7/00

(54) **Schutzvorrichtung für Kraftfahrzeuge**
Protection device for vehicles
Dispositif de protection pour véhicules

(30) Priorität: 17.05.2003 DE 10322311; 05.03.2004 DE 102004010792
(43) Veröffentlichungstag der Anmeldung: 24.11.2004
(73) Patentinhaber: SUSPA Holding GmbH, 90518 Altdorf (DE)
(72) Erfinder: Baumeister, Peter, 90537 Feucht (DE); Kobler, Jürgen, 92358 Dasswang (DE); Waldmüller, Stefan, 90518 Altdorf (DE); Welker, Thomas, 90518 Altdorf (DE); Röll, Sven, 92353 Postbauer-Heng (DE)
(74) Vertreter: Rau, Albrecht

(56) Entgegenhaltungen:
- EP-A- 0 652 138
- EP-A- 1 300 295
- US-A- 3 666 310
- PATENT ABSTRACTS OF JAPAN Bd. 1995, Nr. 01, 28. Februar 1995 (1995-02-28) & JP 6 286537 A (KOBE STEEL LTD), 11. Oktober 1994 (1994-10-11)
- PATENT ABSTRACTS OF JAPAN Bd. 0165, Nr. 49 (M-1338), 18. November 1992 (1992-11-18) & JP 4 208633 A (KOBE STEEL LTD; others: 01), 30. Juli 1992 (1992-07-30)
- PATENT ABSTRACTS OF JAPAN Bd. 0132, Nr. 37 (M-833), 5. Juni 1989 (1989-06-05) & JP 1 047615 A (KAZUHITO FUKAZAWA), 22. Februar 1989 (1989-02-22)

## Beschreibung

Die Erfindung betrifft eine Schutzvorrichtung für Kraftfahrzeuge, gemäß dem Oberbegriff des Anspruchs 1.

Es ist seit langem bekannt, Profile für Stoßstangen bei Kraftfahrzeugen zu verwenden. Eine Schutzvorrichtung der gattungsgemäßen Art ist aus der JP 06286537 A bekannt. In einem als Hohlprofil ausgebildeten Querträger ist ein Stütz-Element eingesetzt, das plattenförmig ist.

Eine aus der EP 0 652 138 A1 bekannte Schutzvorrichtung für Kraftfahrzeuge weist einen hohlen Querträger auf, in welchem ein längliches Stütz-element angeordnet ist.

Auch in der US 3,666,310 ist ein Querträger für ein Kraftfahrzeug offenbart, in welchem ein Stütz-Element sitzt.

Aus der EP 0 718 157 B1 (entspricht US 5,727,826) ist ein entsprechender Querträger bekannt, der zur Stabilisierung innerhalb des Profils mehrere speziell gestaltete, einteilig mit dem Querträger ausgebildete Querstege aufweist. Die Herstellung entsprechender Querträger ist kostenaufwändig und erhöht das Gewicht.

Aus der EP 1 277 621 A1 (entspricht US 2003/015880 A1) ist ein Stoßfänger für ein Kraftfahrzeug bekannt. Der Querträger weist über einen wesentlichen Teil seiner Länge einen Schalenabschnitt auf, in dem mindestens ein napfartig gestaltetes, tiefgezogenes Verstärkungsbauteil befestigt ist. Nachteilig ist hieran, dass das napfartige Bauteil die verschiedenen Deformationskräfte nicht in der gewünschten Form aufnehmen kann. Darüber hinaus ist die Befestigung des Bauteiles schwierig, insbesondere wenn es darum geht zu verhindern, dass das Verstärkungsbauteil bei einem Aufprall einfach aus dem Querträger geschoben wird.

Typische Kollisionsfälle werden bei Kraftfahrzeugen durch bestimmte vordefinierte Tests simuliert. So gibt es unter anderem den IIHS-Pole-Test, bei dem ein Kraftfahrzeug mit 8 km/h rückwärts gegen einen Pfahl gefahren wird. Der entstehende Schaden wird anschließend bewertet. Bei vielen herkömmlichen Querträgern führt der Aufprall auf einen Pfahl zu erheblichen Schäden und Reparaturkosten.

Der Erfindung liegt die Aufgabe zu Grunde, eine Schutzvorrichtung für ein Kraftfahrzeug zu schaffen, bei der die durch bestimmte Aufprallsituationen erzeugten Schäden möglichst gering sind. Die Aufgabe wird durch die im kennzeichnenden Teil des Anspruches 1 angegebenen Merkmale gelöst.

Der Kern der Erfindung besteht darin, in einem als Profil ausgebildeten Querträger ein Stütz-Element vorzusehen, das den Querträger stabilisiert.

Weitere vorteilhafte Ausgestaltungen der Erfindung ergeben sich aus den Unteransprüchen.

Zusätzliche Merkmale und Einzelheiten der Erfindung ergeben sich aus der Beschreibung eines Ausführungsbeispiels an Hand der Zeichnung. Es zeigen
- Fig. 1: einen Querträger mit Stütz-Element,
- Fig. 2: einen Querträger mit Stütz-Element gemäß der Schnittlinie II-II in Fig. 1,
- Fig. 3: einen Querträger mit Stütz-Element gemäß einem Ausführungsbeispiel der Erfindung,
- Fig. 4: eine Draufsicht auf den Querträger gemäß Fig. 3, und
- Fig. 5: einen Querschnitt gemäß der Schnittlinie V-V in Fig. 3.

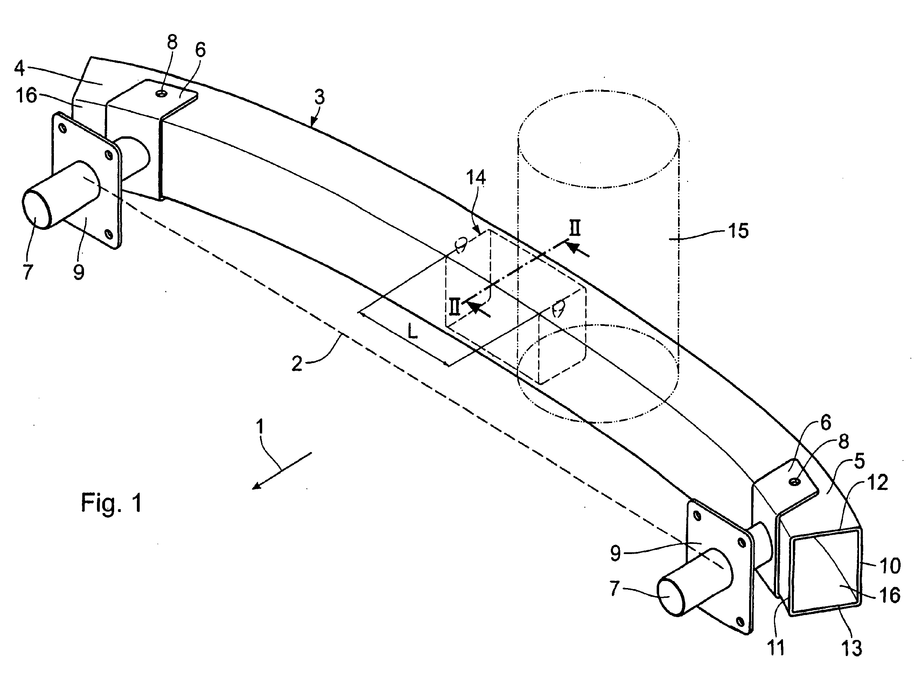

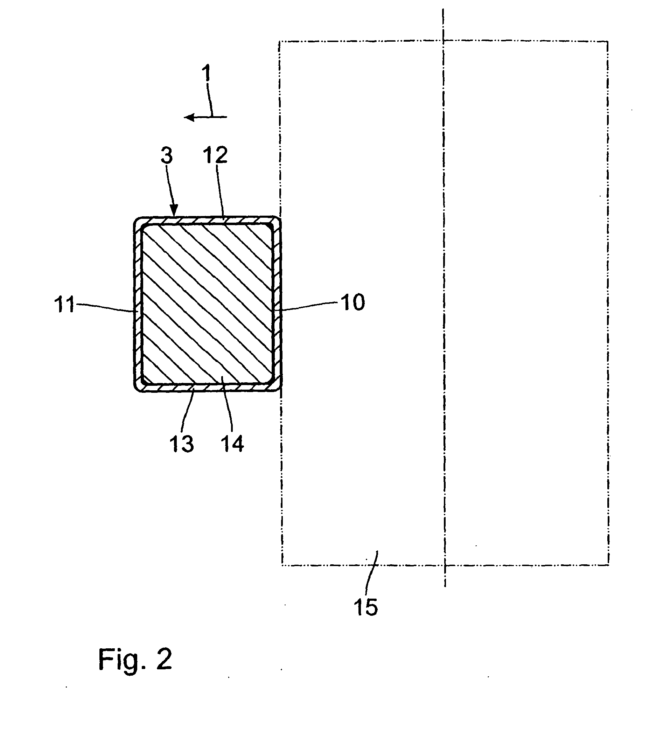

Im Folgenden wird auf die Fig. 1 und 2 Bezug genommen. Eine Schutzvorrichtung für Kraftfahrzeuge weist einen als Stoßstange ausgebildeten, bezogen auf eine senkrecht zur Vorwärts-Fahrt-Richtung 1 eines Kraftfahrzeuges verlaufende Querlinie 2 nach außen gewölbten Querträger 3 auf. Bei dem Querträger 3 handelt es sich um den Querträger am Heck des Kraftfahrzeuges. Es ist jedoch auch möglich, den Querträger 3 an der Frontseite des Kraftfahrzeuges vorzusehen. Der Querträger 3 ist im Bereich seiner beiden Enden 4, 5 über jeweils eine den Querträger 3 U-förmig umgreifende Halterung 6 mit jeweils einem reversibel oder irreversibel arbeitenden Aufpralldämpfer 7 verbunden, der sich parallel zur Fahrt-Richtung 1 erstreckt. Die Halterung 6 ist über Schrauben 8 oder Nieten mit dem Querträger 3 verbunden. An dem Aufpralldämpfer 7 ist eine Befestigungsplatte 9 zur Verbindung mit den nicht dargestellten Längsträgern des Kraftfahrzeuges angebracht.

Bei dem Querträger 3 handelt es sich um ein stranggepresstes Hohlprofil aus Aluminium. Es kann jedoch auch ein mit mindestens einer Schweißnaht geschlossenes Hohlprofil aus Stahlblech verwendet werden. Der Querträger 3 weist einen im Wesentlichen vertikal verlaufenden äußeren Druckgurt 10 sowie einen diesem gegenüberliegenden, im Wesentlichen parallel zu diesem verlaufenden inneren Zuggurt 11 auf. Der Druckgurt 10 und der Zuggurt 11 sind durch eine obere Querwand 12 sowie eine untere Querwand 13, die ebenfalls im Wesentlichen parallel zueinander verlaufen, zu einem einteiligen, umfangsseitig geschlossenen Hohlprofil mit im Wesentlichen rechteckigen Querschnitt miteinander verbunden. Es ist möglich, andere Profile für den Querträger 3 zu verwenden, insbesondere auch Mehrkammerprofile oder zu einer Seite hin, insbesondere zum Fahrzeug hin offene Profile.

In dem Querträger 3 ist ein Stütz-Element 14 angeordnet. Dieses besteht aus Metall, insbesondere Stahl oder Aluminium, oder ist ein Zinkgussteil oder ein Magnesiumgussteil oder ist als Kunststoff-Spritzgussteil ausgebildet. Das Stütz-Element 14 ist mittig in dem Querträger 3, d. h. mittig bezogen auf die Längserstreckung des Querträgers 3, angeordnet. Es ist auch möglich, das Stütz-Element 14 außermittig, insbesondere in der Mitte der linken Hälfte oder der rechten Hälfte des Querträgers 3, anzuordnen. Dies ist insbesondere dann relevant, wenn dort typischerweise Kollisionen, wie z. B. beim rückwärts Einparken, auftreten. Es ist ferner möglich, mehrere Stütz-Elemente 14 in einem Querträger 3 anzuordnen, insbesondere eines mittig anzuordnen sowie jeweils eines im Bereich der Halterungen 6. Das mittig angeordnete Stütz-Element 14 erstreckt sich über mindestens 2 %, insbesondere mindestens 5 %, insbesondere mindestens 10 %, mindestens 15 %, mindestens 25 %, mindestens 35 % der Länge des Querträgers 3. Besonders vorteilhaft ist eine Erstreckung über 10 % bis 15 % des Querträgers 3. Bei üblichen Dimensionierungen eines Personenkraftwagens ist eine Länge L von L = 150 mm besonders vorteilhaft. Es sind jedoch auch andere Dimensionierungen möglich und sinnvoll. Diese hängen von den typischerweise auftretenden Kollisionen und Hindernissen ab, die in einem bestimmten Land vorherrschen. Ein typisches Hindernis ist in Fig. 1 als Pfahl 15 eingezeichnet. Dieser wird, wie eingangs beschrieben, für bestimmte Kollisionstests verwendet. Das Stütz-Element 14 ist in dem Querträger 3 reibschlüssig durch das Biegen von Querträger 3 und Stütz-Element 14 nach dem Einschieben des Stütz-Elementes 14 in den vor dem Biegen geraden Querträger 3 befestigt. Es kann auch stoffschlüssig durch Verschweißen des Stütz-Elementes 14 mit dem Querträger 3 verbunden sein. Es ist auch möglich, das Stütz-Element 14 durch Nieten oder Schrauben, beispielsweise mit einer Querwand 12, 13, zu verbinden. Es ist auch möglich, das Stütz-Element 14 mit dem Querträger 3 durch Einprägungen zu verbinden. Das Stütz-Element 14 ist als Massivkörper ausgebildet, dessen Querschnitt dem Querschnitt des vom Querträger 3 umschlossenen Querträger-Innenraums 16 entspricht. Im vorliegenden Fall liegen die Außenseiten des Stütz-Elementes 14 flächig an den Innenseiten des Querträgers 3 an. Das Stütz-Element 14 weist einen rechteckigen Querschnitt auf. Das Stütz-Element 14 kann aus stranggepresstem Aluminium oder Kunststoff, insbesondere einem glasfaserverstärkten Kunststoff, bestehen.

Bei einem Aufprall des Querträgers 3 mittig gegen den Pfahl 15 führt das Stütz-Element 14 dazu, dass der Querträger 3 an dieser Stelle wenig deformiert oder zerstört werden kann. Durch das Stütz-Element 14 ist eine unmittelbare Kraftübertragung von auf den Druckgurt 10 wirkenden Kräften auf den Zuggurt 11 möglich, sodass die Kräfte möglichst gleichmäßig aufgenommen werden. Das an den Querwänden 12 und 13 anliegende Stütz-Element 14 verhindert, dass diese nach innen einbrechen und dadurch an Stabilität verlieren. Durch die lokale, d. h. nur mittige, Anordnung des Stütz-Elementes 14 im Querträger 3 ist eine Gewichtsersparnis gegenüber einem Querträger möglich, der ein entsprechendes Stütz-Element über die ganze Länge des Querträgers aufweist. Darüber hinaus können der Querträger 3 und das Stütz-Element 14 aus verschiedenen Materialien bestehen, die für die jeweiligen Aufgaben besonders gut angepasst sind. So soll beispielsweise häufig der Querträger 3 geeignet sein, Lack dauerhaft aufzunehmen, wohingegen es bei dem Stütz-Element 14 auf das Aussehen nicht ankommt und deshalb gegebenenfalls auch Kunststoff-Recyclate verwendet werden können.

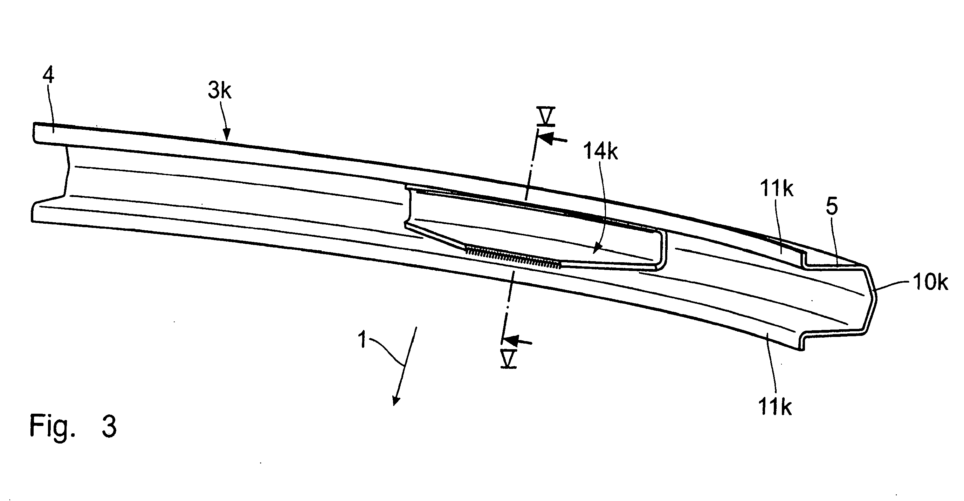

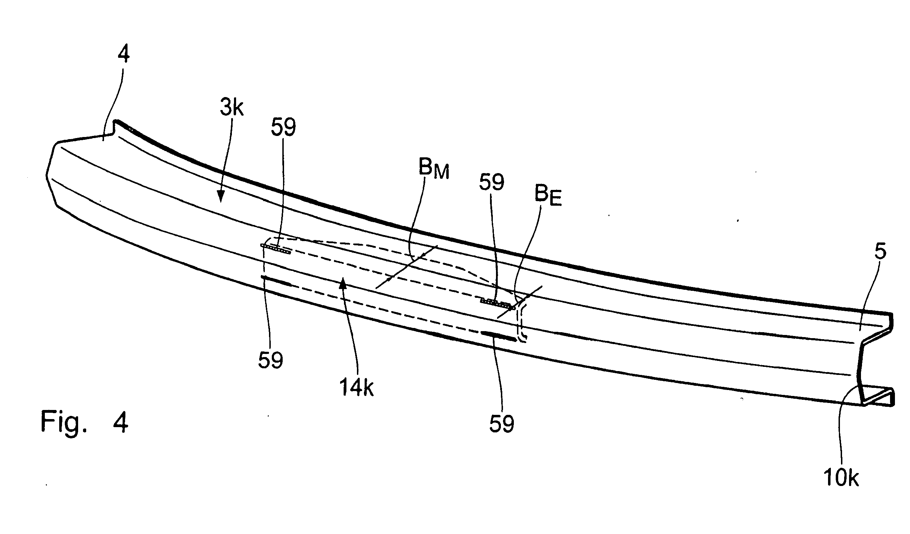

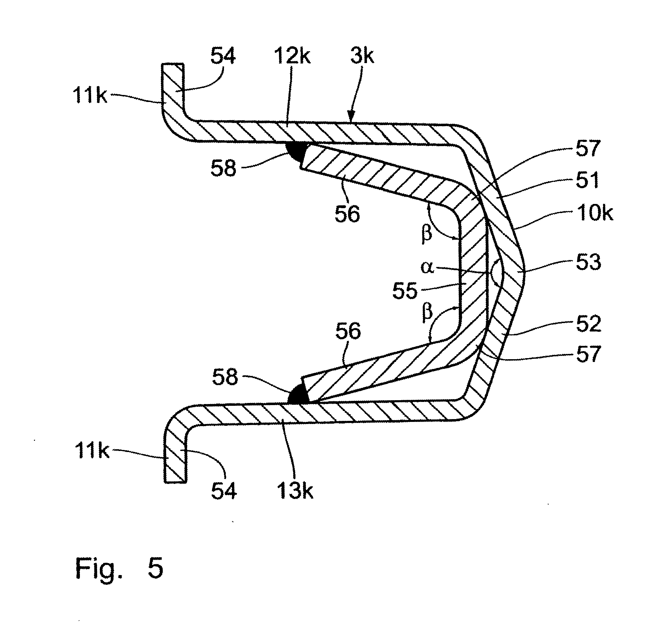

Im Folgenden wird unter Bezugnahme auf die Fig. 3 bis 5 ein Ausführungsbeispiel der Erfindung beschrieben. Identische Teile erhalten dieselben Bezugszeichen wie bei dem Ausführungsbeispiel gemäß Fig. 1 und 2, auf dessen Beschreibung hiermit verwiesen wird. Konstruktiv unterschiedliche, jedoch funktionell gleichartige Teile erhalten dieselben Bezugszeichen mit einem nachgestellten k. Der Querträger 3k besitzt im Wesentlichen einen U-förmigen Querschnitt, der in Richtung auf das Kraftfahrzeug offen ist. Der Querträger ist nach außen durchgebogen, d. h. vom Kraftfahrzeug weg gewölbt. Die obere Querwand 12k und die untere Querwand 13k verlaufen im Wesentlichen parallel zueinander. Der nach außen weisende Druckgurt 10k besteht aus einem oberen Abschnitt 51 sowie einem unteren Abschnitt 52, die mittig im Bereich einer Kante 53 ineinander übergehen. Die Abschnitte 51 und 52 schließen einen Winkel α ein, für den gilt: 90° ≤ α ≤ 180°, insbesondere 120° ≤ α ≤ 160°, insbesondere α ≅ 145°. An die obere Querwand 12k und die untere Querwand 13k schließen sich um 90° nach oben bzw. nach unten vorstehende Stege 54 an, die den Zuggurt 11k bilden. Der Zuggurt 11k stabilisiert den Querträger 3k gegen von außen wirkende Biegekräfte.

In der Mitte des Querträgers 3k ist über ungefähr ein Viertel der Länge des Querträgers ein Stütz-Element 14k eingesetzt. Das Stütz-Element 14k weist ebenfalls einen U-förmigen, in Richtung auf das Kraftfahrzeug offenen Querschnitt auf. Das Stütz-Element 14k weist mittig eine Basis 55 auf, von der aus sich die beiden Schenkel 56 des U's unter einem Winkel β von ungefähr 115° erstrecken. Die Basis 55 geht über Kanten 57 in die Schenkel 56 über. Im Bereich der Kanten 57 ist das Stütz-Element 14k gegenüber der Innenseite der Abschnitte 51 bzw. 52 abgestützt. Die Schenkel 56 und 57 sind im Bereich ihrer freien Enden über Schweißnähte 58 mit den Innenseite der Querwände 12 bzw. 13 verbunden. Im Bereich der längsseitigen Enden des Elements 14k ist dieses im Bereich der Kanten 57 über Schweißnähte, die sich ungefähr über 10 % bis 20 % der Länge des Elements 14k erstrecken, mit den Abschnitten 51 bzw. 52 verschweißt. Die Schenkel 56 und 57 weisen im Bereich ihrer Mitte über ungefähr der Hälfte der Länge eine konstante Breite B_{M} auf. Zu den Enden hin verjüngt sich jeweils ungefähr im Bereich des äußeren Viertels die Breite linear bis zu einer Endbreite B_{E} > 0.

Der Querträger 3k ist ein Aluminium- oder Stahlprofil. Das Stütz-Element 14k ist ebenfalls ein Stahl- oder Aluminium-Einlegeteil. Bei dem Element 14k kann es sich um ein Stanz-Biegeteil oder um ein stranggepresstes Profil handeln. Das Stütz-Element 14k berührt innenseitig im Bereich der Kanten 57 den Druckgurt 10k oder ist diesem zumindest sehr nahe. Wie bereits erwähnt, ist das Element 14k mit dem Querträger 3k verschweißt. Es sind jedoch auch andere Verbindungsformen wie Vernieten, Verschrauben etc. möglich. Die Schweißverbindung der Schweißnähte 59 erfolgt im Bereich der längsseitigen Enden des Elements 14k, damit die Übertragung von Biegemomenten auf die Aufpralldämpfer 7 möglichst gut erfolgt. Die Schweißnähte 58 sind, wie in Fig. 13 erkennbar, im Mittelbereich angebracht, um eine Abstützung des sich bei einem Aufprall einbeulenden Druckgurtes zu gewährleisten.

## Patentansprüche

1. Schutzvorrichtung für Kraftfahrzeuge
a) mit einem als ein Profil ausgebildeten Querträger (3k) zur Aufnahme von Stößen auf ein Kraftfahrzeug, wobei der Querträger (3k) einen äußeren Druckgurt (10k), einen inneren Zuggurt (11k) und mindestens zwei den Druckgurt (10k) und den Zuggurt (11k) miteinander verbindende Querwände (12k, 13k) aufweist,
b) mit mindestens einer Halterung (6) zur Befestigung des Querträgers (3k) an dem Kraftfahrzeug, und
c) mit mindestens einem an dem Querträger (3k) angeordneten Stütz-Element (14k) zur lokalen Stabilisierung des Querträgers (3k) bei einem Aufprall auf den Querträger (3k),
**dadurch gekennzeichnet, dass**
d) der Druckgurt (10k) aus einem oberen Abschnitt (51) sowie einem unteren Abschnitt (52) besteht, die miteinander einen Winkel 0° < α < 180° einschließen,
e) das mindestens eine Stütz-Element (14k) einen U-förmigen Querschnitt mit zwei Kanten (57) aufweist, die an dem oberen Abschnitt (51) bzw. dem unteren Abschnitt (52) des Druckgurts (10k) anliegen, und
f) das mindestens eine Stütz-Element (14k) sich in Richtung auf mindestens ein längsseitiges Ende des Querträgers (3k) hin verjüngt.

2. Schutzvorrichtung gemäß Anspruch 1, **dadurch gekennzeichnet, dass** das mindestens eine Stütz-Element (14k) mittig in dem Querträger (3k) bezogen auf dessen Längserstreckung angeordnet ist.

3. Schutzvorrichtung gemäß einem der vorangehenden Ansprüche 1 oder 2, **dadurch gekennzeichnet, dass** das mindestens eine Stütz-Element (14k) als stranggepresster oder gespritzter oder extrudierter Körper ausgebildet ist.

## Claims

1. A protection device for vehicles, comprising
a) a crossbeam (3k) in the form of a section for receiving impacts on a vehicle, the crossbeam (3k) comprising an outer compression chord (10k), and inner tension chord (11k) and at least two transverse walls (12k, 13k) which connect the compression chord (10k) and the tension chord (11k) to each other;
b) at least one holding device (6) for fixing the crossbeam (3k) to the vehicle; and
c) at least one support element (14k) which is disposed on the crossbeam (3k) for local stabilization of the crossbeam (3k) upon a collision with the crossbeam (3k);
**characterized**
d) **in that** the compression chord (10k) is comprised of a top portion (51) and of a bottom portion (52) which make an angle of 0° < α < 180°;
e) **in that** the at least one support element (14k) has a U-shaped cross section with two edges (57) which rest on the top portion (51) and the bottom portion (52), respectively, of the compression chord (10k); and
f) **in that** the at least one support element (14k) tapers in a direction towards at least one end of the side wall of the crossbeam (3k).

2. A protection device according to claim 1, **characterized in that** the at least one support element (14k) is disposed centrally in the crossbeam (3k) related to the longitudinal extension thereof.

3. A protection device according to one of the preceding claims 1 or 2, **characterized in that** the at least one support element (14k) is an extruded or injection-molded structure.

## Revendications

1. Dispositif de protection pour véhicules automobiles, comportant :
a) une entretoise transversale (3k) agencée en tant que profilé pour l'absorption de chocs d'un véhicule automobile, l'entretoise transversale (3k) comportant une membrure de compression extérieure (10k), une membrure de traction intérieure (11k), et au moins deux parois transversales (12k, 13k) reliant entre elles la membrure de compression (10k) et la membrure de traction (11k),
b) au moins une retenue (6) pour la fixation de l'entretoise transversale (3k) sur le véhicule automobile, et
c) au moins un élément de soutien (14k) disposé sur l'entretoise transversale (3k), pour la stabilisation locale de l'entretoise transversale (3k) lors d'un impact sur l'entretoise transversale (3k),
**caractérisé en ce que**
d) la membrure de compression (10k) est constituée d'un tronçon supérieur (51) ainsi que d'un tronçon inférieur (52), qui incluent entre eux un angle de 0° < α < 180°,
e) l'au moins un élément de soutien (14k) possède une section transversale en forme de U avec deux arêtes (57), qui s'appliquent contre le tronçon supérieur (51) ou le tronçon inférieur (52) de la membrure de compression (10k), et
f) l'au moins un élément de soutien (14k) se rétrécit en direction d'au moins une extrémité longitudinale de l'entretoise transversale (3k).

2. Dispositif de protection selon la revendication 1, **caractérisé en ce que** l'au moins un élément de soutien (14k) est disposé au centre de l'entretoise transversale (3k) en ce qui concerne son extension longitudinale.

3. Dispositif de protection selon l'une des revendications précédentes 1 ou 2, **caractérisé en ce que** l'au moins un élément de soutien (14k) est agencé sous la forme d'un corps filé ou moulé par injection ou extrudé.
